# EUROPEAN PATENT APPLICATION

(11) **EP 4 661 211 A1**
(43) Date of publication of application: **10.12.2025**
(21) Application number: 24180578.7
(22) Date of filing: 06.06.2024
(51) Int. Cl.: H01Q 3/46, H01Q 15/14

(54) **REFLECTOR AND A METHOD FOR REFLECTING ELECTROMAGNETIC WAVES**

(71) Applicant: Fraunhofer-Gesellschaft zur Förderung der angewandten Forschung e.V., 80686 München (DE); Technische Universität Clausthal, 38678 Clausthal-Zellerfeld (DE)
(72) Inventor: YAMMINE, George, 91058 Erlangen (DE); REZAEI, Hossein, 91058 Erlangen (DE); NEUMANN, Niels, 38678 Clausthal-Zellerfeld (DE); ARSLAN, Mehmet Emin, 37085 Göttingen (DE)
(74) Representative: Stöckeler, Ferdinand

(57) **Abstract**

A reflector and a method for reflecting electromagnetic waves is presented. The reflector comprises a support structure having a lateral extension and comprising an array of tiles, wherein the tiles are sparsely arranged on the support structure to be laterally separated from each other by a separation region of the support structure, wherein each tile comprises one or more unit cells that each have a reconfigurable intelligent surface, RIS, and a reflector structure that is arranged to laterally overlap at least with the separation region, wherein the reflector structure comprises a reflective region that laterally overlaps at least with a portion of the separation region and that does not comprise a reconfigurable intelligent surface.

## Description

Embodiment according to the invention relate to a reflector and a method for reflecting electromagnetic waves. Embodiments according to the invention relate to a reflector with a sparse array of tiles having reconfigurable intelligent surfaces and a reflector structure without a reconfigurable intelligent surface, e.g., a sparse reconfigurable intelligent surface with structured metallization.

### Background

Many technologies require a transmission of electromagnetic waves such as cellular networks, wireless local area networking, and radio communication or broadcast. A signal path for an electromagnetic wave may lose quality to various effects such as reflection, diffraction, attenuation, and loss of line of sight. These effects may increase with higher frequencies, which impedes expansion of usable bandwidths to higher frequencies (e.g., to frequencies of 20 GHz and above).

To enhance resilience, reliability, and security in communication, additional signal paths may be required. One approach involves incorporating a mechanically rotating metal sheet between a transmitter (Tx) and a receiver (Rx) to establish an extra communication path through reflection at this metal sheet. For example, such a metal sheet can be rotated or reoriented to account for different incident and reflection angles in order to set up a desired additional communication path, e.g., rotating the metal sheet to an orientation, which allows reflecting electromagnetic waves from the transmitter to the receiver and subsequently reflecting electromagnetic waves using that orientation. However, challenges arise, e.g., due to friction between rotating and static components, limiting the system's lifespan. Furthermore, the time it may take for the metal sheet to rotate to a desired angle is significant, which may limit a speed of operation. Using a metal sheet as a reflector may restrict the reflected angle to match the incident wave angle of an electromagnetic wave, which may necessitate dynamic movement and can limit a field of operation. Commonly, the whole construction cannot be flat in a rotation setup which enhances drastically the required space.

To address these challenges, smart reflectors, specifically Reconfigurable Intelligent Surfaces (RIS), are proposed [1], [2]. RIS has been extensively researched and developed for the sub-6 GHz frequency range.

However, for RIS operating, e.g., at high frequencies for long-distance EM wave transmission, a large area may be needed which implies a large number of unit cells. However, implementing and controlling a large number of unit cells may become impractical and/or complex. An approach presented in the literature is the "sparse RIS" design [3], [4].

However, a signal strength (e.g., gain) of the reflected electromagnetic wave is an important factor, e.g., for a quality of wireless communication. Therefore, there is a need to improve a gain of a reflected electromagnetic wave or to improve a compromise between gain and reflector complexity.

In other words, the technical task involves investigating methods to reduce gain losses in a RIS, e.g., without altering the overall system's purpose and functionality and maintaining a small number of controlled elements.

This is achieved by the subject matter of the independent claims of the present application.

Further embodiments according to the invention are defined by the subject matter of the dependent claims of the present application.

### Summary of the invention

In accordance with an aspect of the present invention, a reflector for reflecting electromagnetic waves is provided. The reflector comprises a support structure (e.g., a substrate, e.g., a silicon wafer, e.g., a printed circuit board) having a lateral extension and comprising an array of tiles, wherein the tiles are sparsely arranged on the support structure to be laterally separated from each other by a separation region of the support structure, wherein each tile comprises one or more unit cells that each have a reconfigurable intelligent surface, RIS, (e.g., configured to manipulate at least one of a phase, amplitude, and polarization of an incident electromagnetic wave, e.g., having a reconfigurable reflective surface), and a reflector structure that is arranged to laterally overlap at least with the separation region, wherein the reflector structure comprises a reflective region that laterally overlaps at least with a portion of the separation region and that does not comprise a reconfigurable intelligent surface (e.g., does not comprise a control circuit to change a phase difference of a reflected electromagnetic wave).

Since the one or more unit cells each have a reconfigurable intelligent surface, the reflector allows changing a reflection behavior of the unit cells. Possible examples include the change of a direction of reflection (e.g., angle of reflection) and/or focusing/defocusing of electromagnetic waves by means of the unit cells (e.g., wherein a superposition of electromagnetic waves reflected by the unit cells has a desired behavior (e.g., reflection, reflection angle, focusing, or defocusing). Such a reflector enables accessing different paths for transmission of wireless signals, e.g., between a base station and a user equipment. Reconfigurable intelligent surface commonly require space for a mechanism that allows reconfiguring (or controlling) the intelligent surface, e.g., electrical contacts to the unit cell. Furthermore, controlling a large amount of unit cells may require complex software. It has been recognized that arranging the tiles in a sparse array, the complexity of the reflector (e.g., in terms of manufacturing and controlling) can be reduced. The reflector structure at least partially laterally overlaps with the separation between the tiles, which can at least partially compensate for the smaller reflection area provided by the sparse arrangement of tiles. The reflector therefore improves a compromise between complexity and reflection gain. It has been recognized that the reflector structure can improve a gain of the reflector even without the reflecting region having RIS.

The reflector may reduce signal losses. Compared to conventional sparse RIS designs where removed units (e.g., tiles) are replaced with unstructured dielectric, the integration of a structured metallization (e.g., in form of the reflector structure) between the remaining units can reduce or minimize signal losses. This may lead to improved efficiency in signal transmission. Remaining RIS Units (e.g., unit cells) may be used more efficiently. The structured metallization (e.g., reflector structure) may enable optimized utilization of the remaining units in the sparse RIS (e.g., due to better control of a low complexity reflector). This may result in more effective reflection of electromagnetic waves, contributing to an overall improvement in system efficiency. The reflector may contribute to enhancing resilience and security in communication, particularly in environments with high frequencies and long distances. The precise reflection of electromagnetic waves may support more reliable communication. The ability to integrate a structured metallization (e.g., reflector structure) in a sparse RIS array may offer a flexible and adaptable solution for various communication scenarios. The structured metallization can be positioned and dimensioned strategically to meet the requirements of different deployment scenarios. Overall, the reflector may lead to enhanced performance and reliability of communication systems, especially in situations where conventional RIS designs may face limitations due to high frequencies and large transmission distances.

According to an embodiment, a ratio between a total area of the separation region and a total area of the tiles is equal to one or higher. For example, the ratio may be larger than two, three, or four. According to an embodiment, a ratio between a total area of the reflective region of the reflector structure and a total area of reflector elements of the tiles is equal to one or larger (e.g., two or larger, e.g., three or larger).

Such a ratio allows for a sparse arrangement of the tiles, which can facilitate providing implementation (e.g., providing electrical circuits) and reduce controlling complexity (e.g., software complexity).

According to an embodiment, the tiles are arranged in a rectangular array (e.g., square array) with rows and columns and the unit cells have a common cell width in a row direction and a common a cell height in a column direction, wherein the tiles are separated from each other in the row direction with a distance equal to or larger than the cell width and are separated from each other in the column direction with a distance equal to or larger than the cell height.

The rectangular array provides a regular structure and subsequently a regularly shaped separation region between the tiles. As a result, implementation can be facilitated (e.g., by using similar production parameters and/or having regular space for providing control components for the tiles). Furthermore, the regular structure facilitates controlling reflection pattern (e.g., beam forming or directing a beam direction), as the reflection can be more homogenous and different control parameters (e.g., phase shift) can be determined with less complexity.

According to an embodiment, the reflective region laterally overlaps with at least a quarter (e.g., at least half, e.g., at least two thirds, e.g., at least three third, e.g., at least 90%) of the separation region. For example, the lateral overlap of the reflective region with the separation region may result in an area that has the same or larger area than a total area of the tiles (or total reflective area of the unit cells; e.g., a total area of reflector elements of the unit cells).

It has been recognized that a gain of the reflector is increased if a sufficient overlap with the separation region is provided. A reflection at the separation region is particularly advantageous, as the close vicinity of the separation region to the tiles may reduce a phase difference of electromagnetic waves in relation to electromagnetic waves reflected by the tiles.

According to an embodiment, the reflector structure comprises a metallization layer (e.g., deposited on a surface of the support structure) that laterally overlaps at least partially with the separation region and does not laterally overlap with the tiles, wherein the metallization layer is arranged on at least one of a front surface of the support structure and a back surface of the support structure that faces away from the front surface (e.g., on the front surface, or the back surface, or both, the front and back surface).

The metallization layer offers flexibility in regards to structure, e.g., allowing covering large areas with metal. Furthermore, the metallization may be performed at least partially at the same processing steps as for manufacturing the RIS, which improves manufacturing efficiency. A metallization of only one of the front surface and back surface may reduce manufacturing complexity. A metallization on both surfaces may improve a gain in reflection amplitude.

According to an embodiment, the metallization layer comprises a continuous portion (e.g., one or more continuous portions) with a plurality of openings (e.g., with a lack of metallization) that each surround a tile of the array of tiles.

The continuous portion of the metallization layer allows forming a large area for reflection, enabling an overall gain. The plurality of openings enable an electrical isolation between the metallization layer and the tiles.

According to an embodiment, the support structure comprises a printed circuit board or integrated circuit having a stack of layers, wherein the reflector structure comprises a metal layer that is part of the stack of layers (e.g., wherein the metal layer laterally overlaps at least with the array of tiles and the separation region).

The use of a printed circuit board or integrated circuit can realize a compact reflector and gives access to structuring processing steps with high accuracy. The metal layer in the layer stack does not have to be arranged at a front surface, providing space for further structures (e.g., a metallization layer or electrical connections for controlling the tiles). Furthermore, the metal layer may be better protected from the environment, reducing the risk of a degradation of the metal surface (e.g., due to rain). Since the metal layer is in the layer stack, the metal layer is less restricted in regards to extension and may extend beyond the tiles, e.g., in order to facilitate fabrication, improve reflection, or for providing electrical connections (e.g., a ground plate for providing a reference signal).

According to an embodiment, the metal layer of the stack of layers is electrically connected to one or more of the RIS (e.g., with one or more vias within the support structure, e.g., with a reflector element of the RIS or a reflector portion of the reflector element).

The metal layer can therefore improve reflection while also providing electrical connections. Since the metal layer can be structured to extend to all the tiles, the metal layer allows for electrically connecting the unit cells to a common reference signal (e.g., using a ground plate).

According to an embodiment, the RIS of the array of tiles are controllable to change a phase shift of an electromagnetic wave reflected by the RIS.

Phase shifts allow electromagnetic waves reflected at the unit cells to interfere in a manner that enables a change of the angle of reflection and/or focusing of a beam. Phase changes may be controlled electrically (e.g., using a positive-intrinsic-negative, PIN, diode), which may be controlled at a high frequency for fast response times.

According to an embodiment, the RIS of the array of tiles each comprise a reflector element on a front surface of the support structure, a RIS control circuit (e.g., comprising a PIN diode) for changing the phase shift, wherein the RIS control circuit is arranged on a backside of the support structure opposite of the front surface, and an electrical connection through the support structure for electrically connecting the reflector element and the RIS control circuit.

The RIS control circuit therefore requires no (or almost no) space on the front side, freeing up more surface to be provided for the reflector element. Furthermore, the RIS control circuit and the reflector element can be fabricated on the same support structure, which can reduce manufacturing complexity.

According to an embodiment, the support structure comprises a subdivided region, in which the support structure is subdivided into laterally neighboring (e.g., adjoining at common borders) sub-regions (e.g., with a rectangular or square shape), wherein sub-regions of a first subset of the sub-regions each comprise a reconfigurable intelligent surface (e.g., comprise a unit cell) of the array of tiles and sub-regions of a second subset of the sub-regions each comprise a non-reconfigurable reflective surface (e.g., wherein sub-regions of a third subset of sub-regions do not comprise a reflective surface).

The subdivided region can be designed and implemented with low complexity (e.g., since fabrication parameters and dimensions are well defined and reusable). Furthermore, the subdivided region may allow defining the first and second subsets at a later stage, enabling a high volume production of support structures that can subsequently be customized.

According to an embodiment, lateral dimensions of the sub-regions of the first subset and second subset of sub-regions are the same.

As a result, fabrication of the first and second subset may be facilitated. Furthermore, the sub-regions may have a symmetrical and/or regular arrangement that can improve homogeneity of reflection and facilitate control of the unit cells.

According to an embodiment, the sub-regions have a rectangular shape (e.g., a square shape) and are arranged in a rectangular array (e.g., square array) of rows and columns, wherein the tiles (e.g., having four sub-regions) are separated from each other in a row direction by one or more consecutive sub-regions and are separated from each other in a column direction by one or more consecutive sub-regions.

It has been recognized that such an arrangement results in a separation region that forms a good compromise between a reflection of the sparsely arranged tiles and a separation region dimensioned for low complexity control implementation.

According to an embodiment, the sub-regions of at least the first subset (e.g., the unit cells) have a rectangular shape with a side length in a range of 1.5 mm to 2 mm, e.g., a range of 1.8 mm to 1.95 mm, 2 mm to 3 mm, e.g., 2.3 mm to 2.4 mm, 5 mm to 6 mm, e.g., a range of 5.3 mm to 5.5 mm, or 22 mm to 28 mm, e.g., 24 mm to 26 mm. The side length may selected out of only one, two, or three of the four ranges described above. According to an embodiment, the side length may be in a range of 2 mm to 12 mm.

It has been recognized that such dimensions enable a good control of the reflection of high frequency electromagnetic radiation, e.g., around a frequency of 28 GHz.

According to an embodiment, sub-regions of the second subset of sub-regions are pre-configured to have a reflection characteristic so that, for an electromagnetic wave reflected by a sub-region of the second subset, an angle of incident is not equal to an angle of reflection.

The pre-configured sub-regions allow changing the reflection characteristics, e.g., a reflection direction with a pre-defined configuration (e.g., configured during manufacturing). Therefore, these sub-regions do not require a control mechanism (e.g., circuitry for providing an electrical control signal), which reduces the overall complexity of the reflector. Nonetheless, the pre-configuration can be used, for example, to established a preferred reflection direction, e.g., in case of a known location or likely location of a transmitter and receiver. The pre-configured sub-regions may be fabricated with similar or the same process steps as the unit cells, which allows for an efficient fabrication.

According to an embodiment, a reflector device comprises a reflector as disclosed herein, and a reflector control circuit configured to control the RIS.

The reflector control circuit allows controlling the reflection characteristic of the reflector, e.g., in order to control a direction of reflection. For example, the reflector control unit may be configured to provide voltage signals that correspond to specific phase differences applied to reflected electromagnetic waves.

According to an embodiment, the reflector device does not comprise an antenna that is separate from the support structure (e.g., not comprise an antenna that is configured to radiate electromagnetic waves based on a signal current received at an input for an electrical current separate from the support structure).

As a result, the reflector device can be used in combination with a separately provided antenna, e.g., an antenna of a base station located several meters away from a building with the reflector. Furthermore, multiple reflectors can be used for the same antenna, e.g., in order to provide multiple communication paths.

According to an aspect, a method for reflecting electromagnetic waves using a reflector is provided. The reflector comprises a support structure having a lateral extension and comprising an array of tiles, wherein the tiles are sparsely arranged on the support structure to be laterally separated from each other by a separation region of the support structure, wherein each tile comprises one or more unit cells that each have a reconfigurable intelligent surface, RIS, and a reflector structure that is arranged to laterally overlap at least with the separation region, wherein the reflector structure comprises a reflective region that laterally overlaps at least with a portion of the separation region. The method comprises reconfiguring the RIS, reflecting electromagnetic waves using the reconfigured RIS, and reflecting electromagnetic waves using the reflective region and that does not comprise a reconfigurable intelligent surface.

The method allows reflecting electromagnetic waves using the reflector as described herein. As a result, the method can realize a reflection with a higher gain due to the reflection by the reflector structure. Furthermore, the method may realize any advantage disclosed herein with reference to the reflector.

### Brief Description of the Drawings

The drawings are not necessarily to scale, emphasis instead generally being placed upon illustrating the principles of the invention. In the following description, various embodiments of the invention are described with reference to the following drawings, in which:
- Fig. 1: shows a schematic view of an example of a reflector for reflecting electro-magnetic waves;
- Fig. 2a: shows a first example of an array of tiles with an irregular arrangement;
- Fig. 2b: shows a second example of an array of tiles with an irregular arrangement;
- Fig. 2c: shows a first example of an array of tiles with a regular arrangement;
- Fig. 2d: shows a second example of an array of tiles with a regular arrangement;
- Fig. 3a: shows a schematic top view of an example of a unit cell;
- Fig. 3b: shows a schematic cross section through a unit cell of Fig. 3a;
- Fig. 3c: shows a schematic top view of an example of a tile with four unit cells;
- Fig. 3d: shows a schematic example of tiles that are not sparsely arranged;
- Fig. 3e: shows a schematic example of sparsely arranged tiles without a reflector structure;
- Fig. 4: shows a schematic top view of an example of a reflector with a metallization layer;
- Fig. 5a: shows a perspective view from the top of a portion of a reflector having a metallization layer;
- Fig. 5b: shows a perspective view from the bottom of the portion of a reflector fig. 5a;
- Fig. 6a: shows a perspective view from the top of a portion of a reflector having a metal layer that is part of a stack of layers;
- Fig. 6b: shows a perspective view from the bottom of the portion of a reflector fig. 6a;
- Fig. 7a: shows a schematic top view of an example of a reflector with a subdivided region;
- Fig. 7b: shows a schematic top view of another example of a reflector with a subdivided region
- Fig. 8a: shows a perspective view from the top of a portion of a reflector having a subdivided region;
- Fig. 8b: shows a perspective view from the bottom of the portion of a reflector fig. 8a;
- Fig. 9a: shows a perspective view from the top of another example of a portion of a reflector having a subdivided region;
- Fig. 9b: shows a perspective view from the bottom of the portion of a reflector fig. 9a;
- Fig. 10a: shows a schematic view of a reflector device;
- Fig. 10b: shows a schematic view of an example of a reflector used to reflect electromagnetic waves emitted by a transmitter;
- Fig. 11a: shows results of an analytical simulation of an amplitude of a reflection of a sparse array of tiles without a reflector structure as described herein depending on a reflecting angle;
- Fig. 11b: shows results of an electromagnetic field simulation of the amplitude of a reflection depending on a reflecting angle; and
- Fig. 12: shows a method for reflecting electromagnetic waves using a reflector as described herein.

### Detailed Description of the Embodiments

Equal or equivalent elements or elements with equal or equivalent functionality are denoted in the following description by equal or equivalent reference numerals even if occurring in different figures.

In the following description, a plurality of details is set forth to provide a more throughout explanation of embodiments of the present invention. However, it will be apparent to those skilled in the art that embodiments of the present invention may be practiced without these specific details. In other instances, well-known structures and devices are shown in block diagram form rather than in detail in order to avoid obscuring embodiments of the present invention. In addition, features of the different embodiments described herein after may be combined with each other, unless specifically noted otherwise.

In the description of the embodiments, terms and text passages placed in brackets are to be understood as further explanations, exemplary configurations, exemplary additions and/or exemplary alternatives.

For facilitating the description of the different embodiments, some of the figures comprise a Cartesian coordinate system x, y, z, wherein the x-y-plane corresponds, i.e. is parallel, to a main surface region of a support structure, wherein the direction vertically up with respect to the reference plane (x-y-plane) corresponds to the "+z" direction, and wherein the direction vertically down with respect to the reference plane (x-y-plane) corresponds to the "-z" direction. In the following description, the term "lateral" means a direction parallel to the x-and/or y-direction or a direction parallel to (or in) the x-y-plane, wherein the term "vertical" means a direction parallel to the z-direction. For example, in the context of an integrated circuit, which may be fabricated using material deposition to grow layers of material, the lateral direction may define extension direction of grown layers (or a surface of a substrate on which the layers are grown), whereas the vertical direction may define a direction perpendicular to the extension of the layers, or parallel to a grown direction, or perpendicular to a surface of the substrate on which the layers are grown. Similarly, for a printed circuit board, the lateral direction relates to directions along a (e.g., planar) surface of the printed circuit board, PCB, whereas a vertical direction relates to a direction parallel to a stacking direction of layers of the PCB.

A lateral overlap may be realized as an overlap of regions or areas if a vertical offset between said regions or areas were disregarded. A lateral overlap may be realized if a projection of regions or areas onto a laterally extending plane (e.g., a projection in vertical direction) overlap.

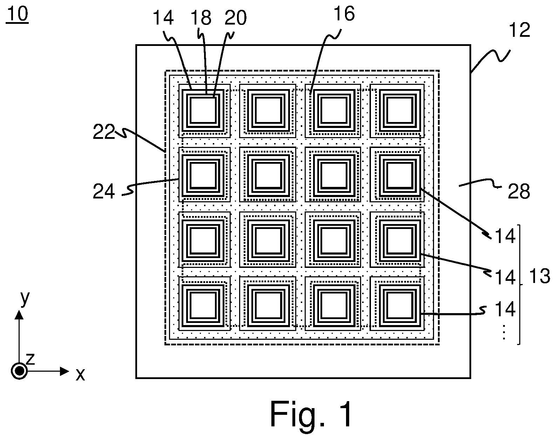

Fig. 1 shows a schematic view of an example of a reflector 10 for reflecting electromagnetic waves.

The reflector 10 comprises a support structure 12 having a lateral extension (e.g., in fig. 1 in x-direction and/or y-direction). The support structure 12 comprises an array 13 of tiles 14, wherein the tiles are sparsely arranged on the support structure to be laterally separated from each other by a separation region 16 of the support structure, wherein each tile 14 comprises one or more unit cells 18 that each have a reconfigurable intelligent surface, RIS, 20.

The support structure 12 further comprises a reflector structure 22 (e.g., a passive reflector structure, e.g., without circuitry for radio frequency signals) that is arranged to laterally overlap at least with the separation region 16, wherein the reflector structure 22 comprises a reflective region 24 (indicated as a dotted area in fig. 1) that laterally overlaps at least with a portion of the separation region 16. The reflective region 24 does not comprise a reconfigurable intelligent surface (e.g., does not comprise a control circuit that allows changing a phase or polarization of a reflected electromagnetic wave using a control signal applied to the control circuit).

The support structure 12 may be or may comprise an integrated circuit (e.g., a substrate, e.g., a microchip, e.g., a structure formed on a semiconductor substrate or wafer) and/or a printed circuit board, PCB. The support structure 12 may have a planar shape (e.g. at least at a region of the array 13 of tiles 14). The support structure 12 may have a front surface (or front side), at which reflective surfaces (e.g., of the tiles 14 and the reflector structure 22) are arranged for reflecting electromagnetic waves, and a back surface (or back side) opposite the front surface. The support structure 12 may form the reflector 10. Alternatively, the reflector 10 may comprise further components (e.g., a frame and/or a control circuitry).

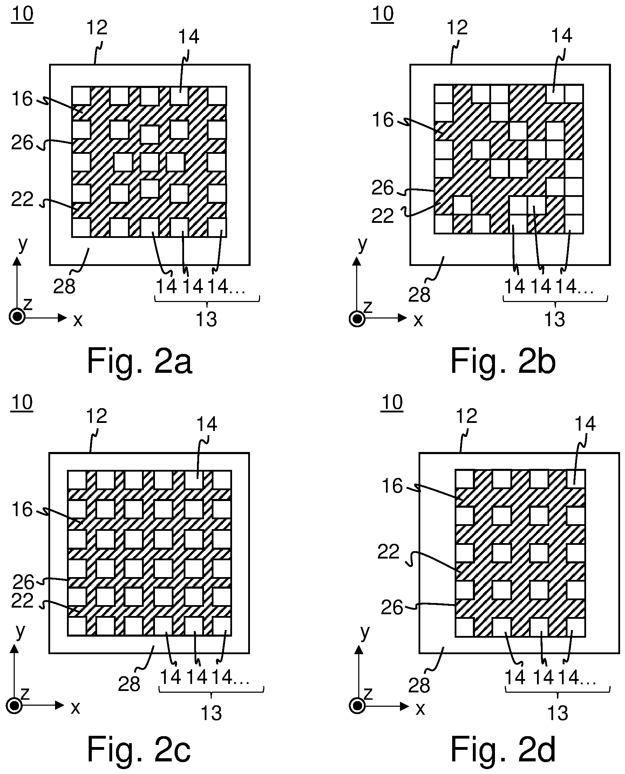

Fig. 2a to d show examples of reflectors 10 with different arrangements for arrays 13 of tiles 14.

Fig. 2a shows a first example of an array 13 of tiles 14 with an irregular arrangement. In the example shown in fig. 2a, positions of the tiles 14 (e.g., geometrical centers of tiles 14) are not arranged in a regular pattern or do not coincide with a regular pattern. The array 13 of tiles 14 may have an irregular arrangement (e.g., with no periodic pattern, e.g., with varying distances between tiles). For example, the tiles 14 may be arranged at (e.g., random or arbitrary) positions on the support structure 12, e.g., that do not coincide with a regular pattern.

Fig. 2b shows a second example of an array 13 of tiles 14 with an irregular arrangement. The tiles 14 themselves are not arranged in a periodic pattern. However, the tiles 14 are arranged at positions that coincide with a regular pattern in form of a square pattern (e.g., or any other regular pattern). In other words, the support structure 12 may be sub-divided into sub-regions with a periodic pattern (e.g., a rectangular or square pattern), wherein the tiles 14 are arranged on sub-regions that are selected in an irregular manner.

Fig. 2c shows a first example of an array 13 of tiles 14 with a regular arrangement. The tiles 14 are arranged in a regular square arrangement. However, any other regular arrangement is possible such as a rectangular pattern, hexagonal pattern, or a triangular pattern. The regular arrangement may define a periodic pattern and/or identical distances between tiles 14 (e.g., identical first distances between tiles 14 in a row direction (e.g., parallel to the x-axis) and identical second distances between tiles 14 in a column direction (e.g., parallel to the y-direction), wherein the first and second distances can be identical or different).

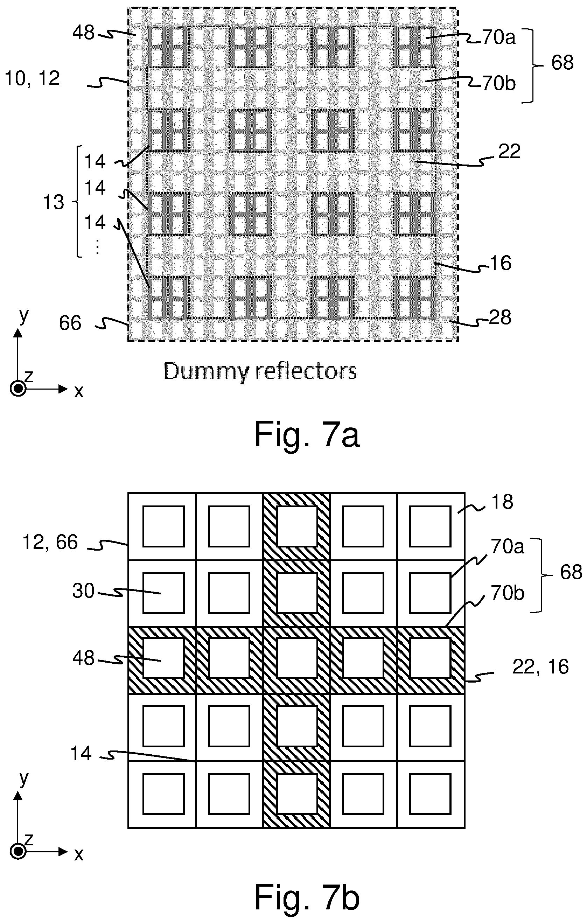

Fig. 2d shows a second example of an array 13 of tiles 14 with a regular arrangement. The support structure 12 comprises a subdivided region (similar to the example shown in fig. 2b), which is subdivided into sub-regions. The tiles 14 are arranged in a square regular arrangement, wherein each tile 14 is arranged in a sub-region, wherein each tile 14 is separated from other tiles in a row direction (e.g., parallel to the x-axis) and column direction (e.g., parallel to the y-axis) respectively by one sub-region. However, the tiles 14 may be separated by more than one sub-region (e.g., two, three, or more sub-regions). The tiles 14 may be separated by an identical amount of sub-regions in a row and column direction (e.g., by one sub-region in both directions as shown in fig. 2d) or be separated by different amounts of sub-regions in the row direction and column direction. The concept of sub-regions will be discussed in more detail further below with reference to fig. 7a to 9b.

The subdivided region shown in fig. 2d (and 2b) is sub-divided in units of tiles 14. However, the subdivided region may also be sub-divided in other units. For example, the subdivided region may be sub-divided in units of unit cells 18, which may be smaller than a tile 14 (e.g., in case of a tile 14 comprising more than one unit cells 18). The tiles 14 may subsequently be separated from each other in units of unit cells 18 (e.g., a width and/or height of a unit cell 18). For example, tile 14 may comprise four unit cells 18 and have a height and width of two unit cells 18, respectively, and have a distance to other tiles 14 of one, two, three or more unit cells 18. Therefore, even in the case of a sub-divided region, tiles 14 may be separated from other tiles 14 in differences different from dimensions of a tile 14.

Fig. 2a-d depict the separation region 16 as an area with diagonal hatching that separates tiles 14 that are depicted as squares. An area of the tiles 14 and the area of the separation region 16 form an array region 26. The array region 26 in fig. 2a-d has a rectangular shape and may have a square shape (e.g., as shown in fig. 2b, c). However, the array region 26 may have any other shape. The array region 26 may define an area that borders outer edges of outer tiles 14 of the array 13 of tiles 14. For example, the array region 26 may define a smallest non-concave area that includes all tiles 14 of the array 13. The outer edges of a tile 14 may define a smallest non-concave border (e.g., in the shape of a rectangle, square, triangle, hexagon, oval or circle) that includes all structures (e.g., all surface structures, e.g., all metal surface structures) of said tile 14. Furthermore, the support structure 12 may comprise further tiles 14 (or unit cells 18) that are not part of the array 13 of tiles 14. For example, the support structure 12 may comprise multiple (e.g., spatially separate) arrays 13 of tiles 14 and/or isolated (e.g., spatially separate) tiles or unit cells (e.g. for reference measurements).

In the examples shown in fig. 2a-d (and fig. 1), the support structure 12 comprises a border region 28, which does not comprise tiles 14 (and no separation region 16). The border region 28 laterally surrounds (or frames) the array region 26. As can be seen in fig. 2a-d, the array region 26 may not necessarily cover an entire surface of the support structure 12. In a different example, the support structure 12 may have no border region 26, e.g., wherein the array region 26 covers an entire front surface of the support structure 12.

The tiles 14 are sparsely arranged on the support structure 12 to be laterally separated from each other by the separation region 16. Therefore, the array 13 of tiles 14 is not densely packed. For example, the array region 26 in fig. 2d has nine rows of seven sub-regions, respectively and therefore 7 x 9 = 63 sub-regions. In the case of all sub-regions in fig. 2d being occupied by a tile 14 (e.g., an array of 7 x 9 = 63 tiles 14), the array region 26 of fig. 2d would not form a sparse array. However, in the array region in fig. 2d, only 4 x 5 = 20 sub-regions are occupied by a tile 14.

A ratio between a total area of the separation region 16 and a total area of the tiles 14 may be equal to one or higher (e.g., two or higher, three or higher, five or higher). In the example of fig. 2d, 20 sub-regions of the array region 26 are occupied by a tile 14 and 63 - 20 = 43 sub-regions are laterally overlapping (or formed by) the separation region 16. Therefore, the ratio between the total area of the separation region 16 and a total area of the tiles 14 is 43/20 = 2.15, which constitutes a sparse arrangement according to the above described criteria.

Another criteria may be defined by a fill factor, which commonly defines for an array a ratio of an active area compared to a total area. Therefore, a fill factor may presently be defined by a ratio between a total area of the tiles 14 and a total area of the array region. For example, such a filling factor for the array region 26 shown in fig. 2b may be determined as 27/64 ≈ 0.42 and for the array region 26 shown in fig. 2d as 20/63 ≈ 0.32. The fill factor for the array region 26 of the reflector may be smaller than one or may be smaller than or equal to 0.9, or 0.75.

A sparse arrangement may be defined by a distance between tiles 14. According to an embodiment, the tiles 14 are arranged in a rectangular array 13 with rows and columns and the unit cells 18 have a common cell width in a row direction (e.g., x-direction) and a common a cell height in a column direction (e.g., y-direction), wherein the tiles are separated from each other in the row direction with a distance equal to or larger than the cell width and are separated from each other in the column direction with a distance equal to or larger than the cell height. According to another embodiment, the tiles 14 have a common tile width in a row direction and a common a tile height in a column direction, wherein the tiles are separated from each other in the row direction with a distance equal to or larger than the tile width and are separated from each other in the column direction with a distance equal to or larger than the tile height.

For example, in fig. 2c, the tiles 14 may each comprise four unit cells 18 with a square shape and having a cell height and cell width, wherein the four unit cells 18 are arranged in a square. The tiles 14 in fig. 2c are arranged at a distance of approximately 60% of the width or height of the tiles 14 and therefore approximately 120% of the width and height of the unit cells 18. In such a scenario, the tiles 14 are therefore separated by more than a width and height of one unit cell, which would constitute a sparse arrangement according to the criteria described above.

In fig. 1, the reflective region 24 laterally overlaps with a portion of the separation region 16. For example, the reflective region 24 may laterally overlap with at least a quarter (e.g., 25%), half (50%) or three quarter (75%) of the separation region 16. The overlap of the reflective region 24 with the separation region 16 may be smaller than 95%. A minimum overlap enables a sufficient reflection of electromagnetic waves. A limit of the maximum overlap of the reflective region 24 may reduce a complexity of a fabrication of the reflective region 24 (e.g., for optical lithography, lift-off) and reduces risk of an electrical contact or electromagnetic coupling with other electrical components of the reflector 10.

The reflective region 24 may be formed by a surface of the reflector structure 22. For example, the reflector structure 22 may be a metal layer (e.g., deposited on the support structure 12 and/or arranged within a layer stack), wherein a surface of the metal layer forms the reflective region 24. However, the reflector structure 22 may comprise additional features. The reflector structure 22 may comprise portions of the support structure 12 laterally overlapping with separation region 16. For example, said portion of the support structure 12 may be partially metallized with a gap between the metallization and the tiles 14. Therefore, the risk of the metallization impeding a functionality of the tiles 14 (e.g., causing a short-circuit) may be reduced. The reflector structure 22 (or the reflective region 24 of the reflector structure) may be electrically isolated from the tiles 14 (e.g., isolated from the unit cells 18 or reflector elements of the unit cells 18). The electrical isolation may be realized by a lateral distance and/or an isolating layer.

In the example shown in fig. 1, the reflective region 24 extends beyond the array region, but does not extend over the entire border region 28. Alternatively, the reflective region 24 may extend over the entire border region 28. For example, reflective region 24 may span the entire support structure 12 and comprise openings for the tiles 14 (e.g., as shown in fig. 1) or overlap fully (or partly) the tiles 14 (e.g., for a reflective region 24 of a metal layer that extends within the support structure 12). In another example, the reflective region 24 is confined to the array region 26 (e.g., does not extend beyond the array region 26).

In the example shown in fig. 1, a width (e.g., in x-direction, e.g., in row direction) of the reflective region 24 between each tile 14 is identical and a height (e.g., in y-direction, e.g., in column direction) of the reflective region 24 between each tile 14 is identical. Alternatively, at least one of the width and height of the reflective region 24 may differ between tiles 14. Similarly, a width and/or height of the reflective region 24 extending beyond the array region 26 may be identical to the width and/or height of the reflective region 24 between tiles 14 (e.g., as depicted in fig. 1). Alternatively, the width extending beyond the array region 26 may be larger (e.g., in order to increase a size of an overall reflective area) or smaller (e.g., in order to increase a gain of electromagnetic waves reflected by RIS).

The reflective region 24 may comprise or consist of a metal such as a metal layer or metal sheet. The metal may comprise one or more of copper, gold, silver, aluminium, zinc, nickel, and iron. At least a portion of the reflective region 24 may be formed by metallization (e.g., structured by optical lithography). The reflective region 24 may be grown in a fabrication process for an integrated circuit, e.g., using one or more semiconductor fabrication processes. At least portion of the reflective region 24 may be a metal sheet of a printed circuit board, e.g., in the case of the support structure 12 comprising a printed circuit board.

The tiles 14 may comprise exactly one unit cell 18 or comprise more than one unit cells 18 (e.g., two, three, four, five, six, or more unit cells 18). The unit cells 18 may be arranged in a rectangular (e.g., square) pattern in the tile 14 (e.g., an arrangement of 2x1, 2x2, 3x2, or 3x3 unit cells 18). However, any other arrangement of the unit cells 18 is possible such as a single or multiple columns of unit cells 18. The arrangement of the unit cells 18 may be a compact arrangement that depends on a shape of the unit cells 18 (e.g., a hexagonal arrangement for hexagonally shaped unit cells 18). The tiles 14 may have an identical size and shape.

The unit cells 18 within the same tile 14 may be individually controllable or may be controlled collectively. For example, a tile 14 may have four unit cells 18, which may be collectively (or jointly) controlled by a single electrical signal. Similarly, tiles 14 may be individually controllable or may be controlled in sub-groups (e.g., a sub-group of four tiles 14). Each unit cell 18 may be a two terminal device having a terminal for a reference terminal (or ground terminal or ground plate) and a control terminal for a control signal. The control terminal of the unit cells 18 of the same tile 14 may be electrically connected in order to provide a collective (single) control signal to all unit cells 18 of the same tile 14. The reference terminal of unit cells 18 of the same tile 14 (or of all tiles 14) may be electrically connected in order to provide a collective reference signal (e.g., ground).

Each unit cell 18 has a reconfigurable intelligent surface, RIS, 20. Reconfigurable intelligent surfaces (RIS) are also known as intelligent reflecting surfaces (IRS), programmable surfaces, smart reflecting surfaces, adaptive reflect arrays, reconfigurable electromagnetic surfaces and many other names. In this disclosure, the name RIS is used to refer to all definitions that have the same working concept.

RIS commonly have the ability to control or reconfigure a reflection characteristic (or reflecting behaviour) of its surface. For example, the cell units 18 may configured to manipulate at least one of a phase, amplitude, and polarization of an incident electromagnetic wave. In other words, the unit cells 18 may have a reconfigurable reflective surface. The unit cells 18 may be configured to be controllable electrically, mechanically, or thermally.

The array 13 of tiles 14 may be configured to control a direction of reflection of an incident electromagnetic wave. In the following, such a control of direction will be described in the context of a control or manipulation of a phase of an electromagnetic wave. However, it is understood that one or more other characteristics of the electromagnetic wave (e.g., amplitude, and polarization) may be controlled in addition or alternatively.

The array 13 of tiles 14 may be configured to perform phase shifting of a reflected electromagnetic wave to perform beamforming (e.g., focusing reflected electromagnetic waves, e.g., to a single user) and/or reflecting electromagnetic waves with arbitrary angles (e.g., reflecting a planar wave). To this end, each unit cell 18 (or a tile of collectively controlled unit cells 18) may be configured to control a phase shift (e.g., in discrete increments) of a reflected electromagnetic wave. Radiation characteristics of the electromagnetic wave (e.g., direction of a main lobe and/or focusing or defocusing) may be controlled by applying different phase shifts at different unit cells 18. For example, each unit cell 18 may be regarded as point sources for the reflected electromagnetic waves, wherein the different phase shifts between unit cells 18 can generate interference patterns that alter the radiation characteristics (e.g., direction and/or focusing) of the reflected electromagnetic wave. For example, delaying a phase in a center of the array 13 of tiles 14 compared to a periphery of the array 13 of tiles 14 may result in a beam focusing effect.

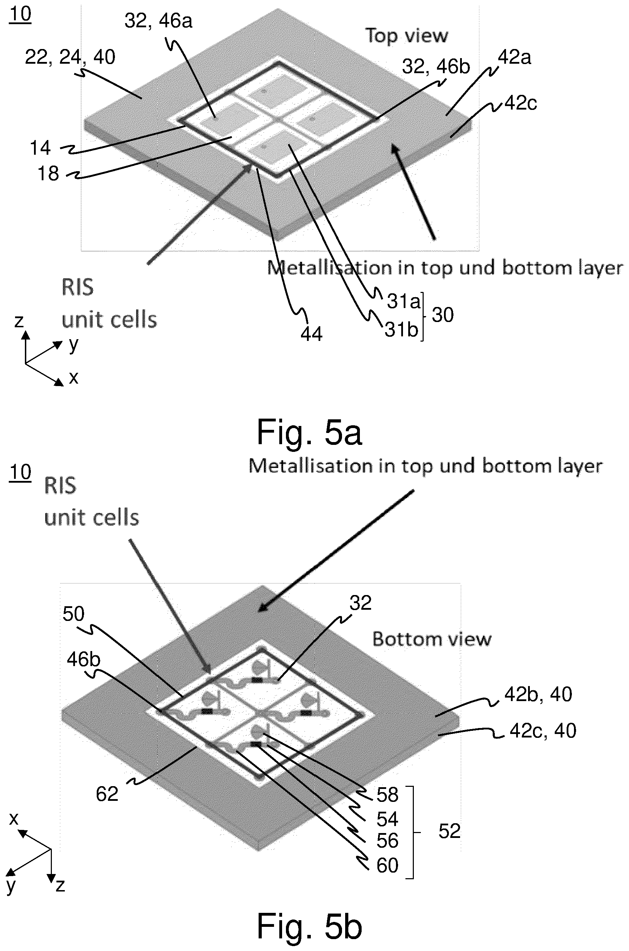

The unit cells 18 (or the RIS 20 of the unit cell 18) may each comprise a reflector element (e.g., comprising metal) on a front surface of the support structure 12. The reflector element may be formed by metallization (e.g., using structuration such as optical lithography). The reflector element may comprise one or more portions (e.g., portions of metallization on the support structure 12). For example, the reflector element may comprise a first portion that is spatially separated from a second portion (e.g., spatially separated on the surface of the support structure 12, but not necessarily within or on a backside of the support structure 12). The first portion of the reflector element may be surrounded by the second portion of the reflector element. An example of the reflector element with two portions will be described in more detailed further below with reference to fig. 5a, b. The reflector element or a portion thereof may have a rectangular or square shape. The reflector element may cover 25% (or 50% or 75%) or more of an area the unit cell 18. The unit cell 18 (or the RIS 20 of the unit cell 18) may further comprise a RIS control circuit (or unit cell control circuit) for changing the phase shift, wherein the RIS control circuit may be arranged on a backside of the support structure 12 opposite of the front surface. The unit cell 18 (or the RIS 20 of the unit cell 18) may further comprise an electrical connection through the support structure 12 for electrically connecting the reflector element and the control circuit.

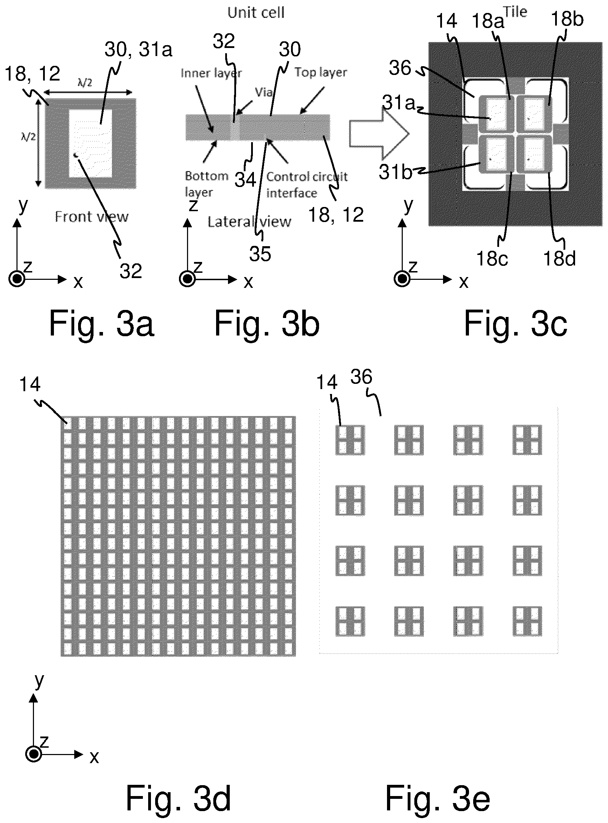

Fig. 3a shows a schematic top view of an example of a unit cell 18. The unit cell 18 has a square shape, but may have any other shape as described herein. The unit cell 18 has a height and width of λ/2, wherein λ is a central frequency of a spectrum of electromagnetic waves to be reflected. For example, a central frequency of 28 GHz corresponds to a wavelength of approximately 10.7 mm, resulting in a width and height of approximately 5.35 mm. The unit cells 18 may be have a rectangular shape (e.g., square shape) with a side length in a range of 5 mm to 6 mm, e.g., a range of 5.3 mm to 5.5 mm. However, the unit cells 18 may have any other side length and any other central frequency may be used. In one example, the unit cells 18 may have a rectangular shape (e.g., square shape) with a side length in a range of 22 mm to 28 mm, e.g., 24 mm to 26 mm (e.g., for a central frequency of 6 GHz). The unit cells 18 may have a side length in a range of 3 mm to 5 mm, e.g., 3.7 mm to 3.8 mm (e.g., for central frequency of 40 GHz). The unit cells 18 may have a side length in a range of 2 mm to 3 mm, e.g., 2.3 mm to 2.4 mm (e.g., for central frequency of 64 GHz). The unit cells 18 may have a side length in a range of 1.5 mm to 2 mm, e.g., 1.8 mm to 1.95 mm (e.g., for central frequency of 80 GHz). However, the side length may have a different length, for example, the same length (e.g., with a tolerance of 5% or 2%) as the wavelength of the central frequency (e.g., in ranges defined by twice the values of the interval boundary disclosed above).

The unit cell 18 in fig. 3a comprises a reflector element 30. The reflector element 30 in the present description comprises a first reflector element portion 31a and a second reflector element portion 31b (not shown in fig. 3a). However, the reflector element 30 may comprise any number of reflector element portions. The reflector element 30 is formed by a structured metal layer (e.g., a first structure for the first reflector element portion 31a and a laterally separate structure for the second reflector element portion 31b) that is fabricated by metallization of a surface of the support structure 12. The reflector element 30 in fig. 3a covers approximately one third of an area of the unit cell 18. However, the reflector element 30 may cover a different amount of the area such as 25% or more. The unit cell 18 further comprises an electrical connection (e.g., one or more vias) 32 through at least a portion of the support structure 12, wherein the electrical connection is electrically connected with the reflector element 30.

Fig. 3b shows a schematic cross section through a unit cell 18 of Fig. 3a. On a top surface (in positive z-direction, e.g., front side) of the unit cell 18 is arranged the reflector element 30. The top surface comprises a top layer, which comprises the reflector element 30 and may optionally comprise a metallization layer 40 as further described below. Through the support structure 12 extends the electrical connection 32 in form of one or more vias. However, the electrical connection 32 may be formed in a different way (e.g., by metallization of an etched trench). On a bottom surface (in negative z-direction, e.g., back side) of the unit cell 18 is arranged a bottom layer 34. The bottom layer 34 comprises the RIS control circuit (or at least a portion thereof). Applying an electrical control signal (e.g., a specific voltage) to the RIS control circuit allows controlling an amount of phase shift performed by an electromagnetic wave reflected at the reflector element 30. In the example of fig. 3b, the RIS control circuit of a plurality of unit cells 18 (e.g., four unit cells 18) are electrically connected at a control circuit interface 35 in order to control the plurality of unit cells 18 collectively (e.g., applying one control signal to all units cells 18 at the same time). Alternatively, the tile 14 may not comprise a control circuit interface 35 for the RIS control circuits.

Fig. 3c shows a schematic top view of an example of a tile 14 with four unit cells 18a-d. The unit cells 18a-d are arranged in a square 2x2 arrangement. The unit cells 18a-d share a common corner in the middle, which may facilitate fabrication of electrical connections. However, the tile 14 may comprise any other number of unit cells 18 in any arrangement as disclosed herein. The tile 14 comprises regions with a dielectric 36 (e.g., air) that surround the unit cells 18. Alternatively, the tile 14 may not comprise surrounding regions with a dielectric. For example, the unit cells 18 may border directly other unit cells 18, a material of the support structure 16, or the reflector structure (e.g., a reflective region 24 thereof).

The tiles 14 are sparsely arranged on the support structure 12 to be laterally separated from each other by the separation region 16. Fig. 3a to c show examples of RIS hardware definition.

Fig. 3d shows a schematic example of tiles 14 that are not sparsely arranged. The array 13 of tiles 14 comprises 16 x 16 = 256 tiles 14 (e.g., each comprising one unit cell 18). The tiles 14 are densely packed with no space between them. Therefore, the arrangement of the array 13 of tiles 14 shown in fig. 3d does not constitute an arrangement according to the present invention.

The support structure 12 disclosed herein comprises a reflector structure that is arranged to laterally overlap at least with the separation region 16.

Fig. 3e shows a schematic example of sparsely arranged tiles 14 without a reflector structure. Instead, a support structure is shown that separates the tiles 14 with a dielectric (e.g., air), wherein the support structure does not comprise a reflector structure that overlaps laterally with a separation region between the tiles 14. Therefore, such a support structure as shown in fig. 3e does not constitute a support structure according to the present invention.

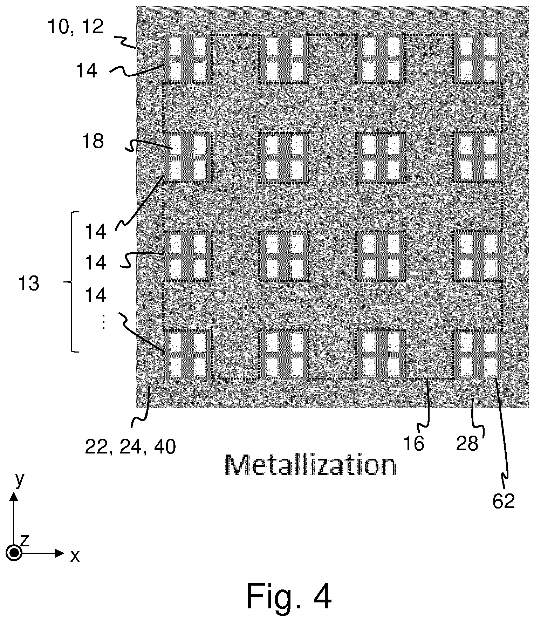

Fig. 4 shows a schematic top view of an example of a reflector 10 with a metallization layer 40. The reflector 10 may be formed by the support structure 12.

The support structure 12 comprises 16 tiles 14 with four unit cells 18, respectively, wherein the tiles 14 and unit cells 18 have a square shape respectively. However, any other number, combination and shape of tiles 14 and unit cells 18 may be used.

The array 13 of tiles 14 are sparsely arranged on the support structure 12 with a separation region 16 separating the tiles 14 on the support structure 12. The support structure 12 further comprises a reflector structure 22 formed by (or comprising) the metallization layer 40, wherein a surface of the metallization layer 40 forms a reflective region 24.

In the example shown in fig. 4a, the reflective region 24 (and the reflector structure 22) laterally overlap the entire separation region 16 (or essentially the entire separation region 16, e.g., more than 95% or 99% thereof). A metallization layer 40 such as shown in fig. 4 may provide a large reflective area and may be fabricated with low complexity. Furthermore, the reflective region 24 (and the reflector structure 22) laterally overlap (or cover) a border region 28 of the support structure 12, which surrounds (or frames) the array region of the tiles 14. Alternatively, the reflective region 24 (and the reflector structure 22) may not laterally overlap with the border region 28 or only laterally overlap with a portion of the border 28.

Fig. 5a shows a perspective view from the top of a portion of a reflector 10 having a metallization layer 40.

Fig. 5b shows a perspective view from the bottom of the portion of the reflector 10 shown in fig. 5a. Any feature described with reference to fig. 5a may be applicable to fig. 4 and 5b and vice versa.

In the example shown in fig. 5a, b, the metallization layer 40 is arranged on a front side 42a, a back side 42b, and on a lateral surface 42c of the support structure 12. As a result, reflection may be increased. Alternatively, only one or two of the front side 42a, the back side 42b, and the lateral surface 42c may comprise a metallization layer 40. For example, only the front side 42a or only the back side 42b may comprise a metallization layer 40.

The reflector elements 30 may comprise or be formed from a metal (e.g., at least one of copper, gold, silver, aluminium, zinc, nickel, and iron). The reflector elements 30 may be formed from a metallization layer that is formed in the same composition (e.g., same element or composition of elements, e.g., same layer of materials). The metallization layer 40 may have the same thickness as reflector elements 30. Therefore, the metallization layer 40 and reflector elements 30 may have similar reflectivity and may be manufactured in the same metallization process.

In the following, an embodiment of the unit cell 18, a reflector element 30, and a RIS control circuit 52 will be described with reference to fig. 5a and b. Any of the described features may be used in isolation or any combination with any other unit cell 18 described herein.

The tile 14 comprises the second reflector element portion 31b, which extends along a peripheral circumference of the tile 14. The second reflector element portion 31b also extends along a peripheral circumference of each unit cell 18. The electrical connection 32 comprises first electrical connections 46a electrically connected with the first reflector portion 31a and second electrical connections 46b electrically connected with the second reflector portion 31b. The first and second electrical connections 46a, b comprise vias, but may be realized in any other manner.

The reflector structure 22 has a metallization gap 44 without metallization. The metallization gap 44 can form a region of isolation that may prevent an electrical connection between the metallization layer 40 and the first reflector portion 31a. The metallization gap 44 may have a lateral distance in a range of 0.1 mm to 3.0 mm (e.g., 0.1 mm to 1.0 mm). Such a metallization gap 44 may, for example, be realized with a support structure 12 comprising (or consisting of) a PCB. In another example, the metallization gap 44 may have a lateral distance in a range of 0.03 mm to 3.0 mm (e.g., 0.03 mm to 0.1mm). Such a metallization gap 44 may, for example, be realized with a support structure 12 comprising an integrated circuit (e.g., structured on a semiconductor substrate), e.g., for applications in higher frequency ranges.

At the back side 42b (see fig. 5b), the tile 14 comprises a lower conductive trace 50, which is electrically connected with the first reflector element portion 31a over the second electrical connections 46b. The lower conductive trace 50 may be realized in the same shape as the second reflector element portion 31b. Furthermore, the metallization layer 40 on the backside 42b, and a metallization gap between the lower conductive trace 50 and the metallization layer 40 are realized in the same way as on the front side 42a. Alternatively, at least one of the metallization layer 40 on the back side 42b, and a metallization gap may be realized differently compared to the front side 42a.

Each unit cell 18 comprises a RIS control circuit 52 that is electrically connected with the lower conductive trace 50. Therefore, the RIS control circuits 52 can be collectively controlled by a single control signal. Alternatively, one or more unit cells 18 may have individually controllable RIS control circuits 52. The RIS control circuits 52 allow controlling a phase difference that a reflected electromagnetic wave experiences.

In the example shown in fig. 5b, the RIS control circuit 52 of each unit cell 18 comprises a first diode connector 54, a PIN diode 56, a radial stub 58, and a second diode connector 60. The first diode connector 54 electrically connects the PIN diode 56 with a first electrical connection 46a and subsequently the first reflector element portion 31a. The second diode connector 60 electrically connects the PIN diode 56 with a second electrical connection 46b and subsequently the second reflector element portion 31b. Therefore, the RIS control circuit 52 comprises a PIN diode 56 that is electrically connected to the first and second reflector element portions 31a, b. The PIN diode 56 may therefore cause a phase shift of an electromagnetic wave that is reflected at the reflector elements 30 (and the first and second reflector element portions 31a, b thereof). The amount (or magnitude) of the phase shift may be controlled by applying a control signal to the RIS control circuit 52. For example, an electrical control signal may be applied at the lower conductive trace 50. The (optional) radial stub 58 is electrically first diode connector 54 and may form a frequency filter. The radial stub 58 may decrease a coupling (or decouple) between an electromagnetic wave to be reflected at the unit cell 18 and a control signal applied to the RIS control circuit 52. In other words, the radial stub 58 may be provided, e.g., in order to decouple a control signal for the PIN diode 56 an the electromagnetic wave that shall be reflected, e.g., the radial stub 58 may hinder the electromagnetic wave from entering the RIS control circuit 52.

The metallization layer 40 comprises a continuous portion (e.g., an integrally formed metal layer) with an opening 62 that (laterally) surrounds the tile 14. The metallization layer 40 comprise multiple openings 62 that each surround a tile 14 of the array 13 of tiles 14. For example, the metallization layer 40 shown in fig. 4 comprises sixteen openings 62 that each laterally surrounds one of the sixteen tils 14. However, the metallization layer 40 does not necessarily have to surround each tile 14. For example, in the case that the metallization layer 40 shown in fig. 4 would only overlap with the separation region 16 and not the border region 28, the metallization layer 40 may not surround the outer most twelve tiles 14 and only comprise four openings 62 for the four inner tiles 14.

In fig. 4, the entire metallization layer 40 forms a continuous (or integrally formed) portion. However, the metallization layer 40 may be formed by a plurality of continuous portions that are laterally separated. Such a separation may allow providing other components for the support structure 12 that do not require an electrical connection with the metallization layer 40 (e.g., a screw through the support structure 12 or a separate electrical metal trace).

Fig. 5a, b show an example of a reflector 10 with a metallization layer 40. The metallization layer 40 may be formed to be a metallization of a portion or the entire array region 26, wherein the metallization layer 40 comprises a metallization gap (e.g., a surface region of the support structure 12 at which no metal deposition is not performed, e.g., wherein metal deposition is prevented by a photoresist) around a circumference each tile 14.

The support structure 12 may comprise a printed circuit board and/or an integrated circuit having a stack of layers, wherein the reflector structure 22 may comprise a metal layer that is part of the stack of layers (e.g., wherein the metal layer laterally overlaps at least with the array 13 of tiles 14 and the separation region 16). Such a stack of layers will be subsequently described with the example of a printed circuit board. However, the same principles are applicable to a stack of layers of an integrated circuit.

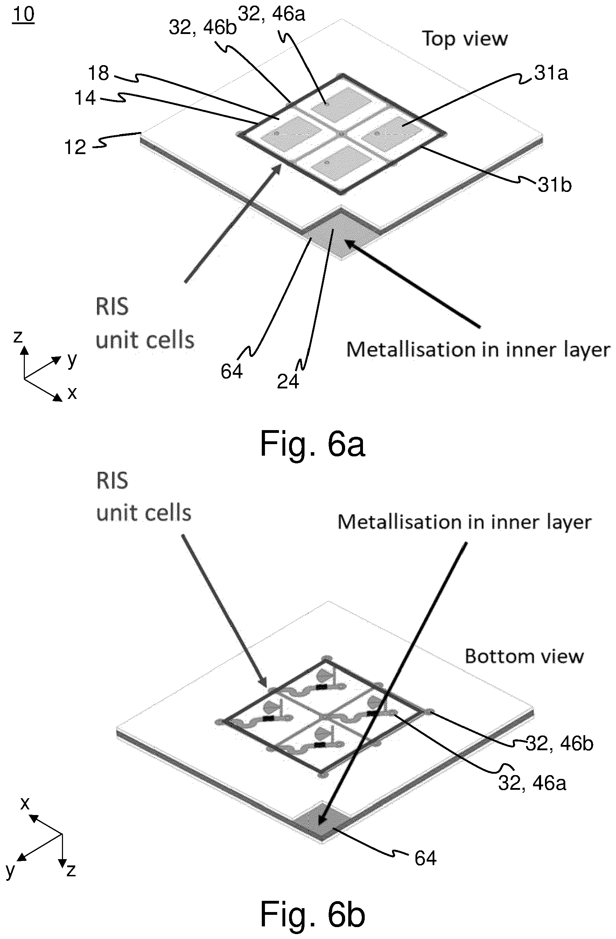

Fig. 6a shows a perspective view from the top of a portion of a reflector 10 having a metal layer that is part of a stack of layers.

Fig. 6b shows a perspective view from the bottom of the portion of the reflector 10 of fig. 6a. Any feature described with reference to fig. 6a may be applicable to fig. 6b and vice versa.

The reflector 10 comprises a tile 14 with unit cells 18, which may be partially or entirely realized in the manner as described above with reference to fig. 5a, b.

The reflector 10 comprises a support structure 12, which comprises or consists of a printed circuit board, PCB. The printed circuit board comprises a stack of layers (e.g., layers extending in a lateral direction and stacked in a direction perpendicular to the lateral direction), wherein one of the layers is a metal layer 64 (e.g., comprising or consisting of one or more of copper, gold, silver, and aluminum). In fig. 6a, b a portion of the support structure 12 is cut out in order to illustrate the metal layer 64 within the stack of layers.

A surface of the metal layer 64 that faces towards the front side of the support structure 12 (e.g., facing toward the positive z-direction) forms or comprises the reflective region 24. Therefore, the metal layer 64 may be part of the reflector structure 22. The reflector structure 22 may optionally comprise further reflective regions 24 such as a metallization layer 40 as described herein.

The metal layer 64 may laterally overlap all of or part of the separation region 16 (e.g., but not the tiles 14) or all or part of the array region 26 (e.g., the separation region 16 and at least part of the tiles 14). The metal layer 64 may laterally overlap part of or all of the support structure 12 (e.g., overlapping with part of or all of the border region 28).

The metal layer 64 may be electrically connected to one or more electrical connections 32 and/or may be electrically isolated from one or more electrical connections 32. For example, the metal layer 64 may be electrically connected to the first electrical connections 46a and subsequently to the first reflector element portion 31a of each (or some of the) unit cells 18. Therefore, the first reflector element portion 31a can be connected to a common reference voltage (e.g., using a ground layer). Furthermore, the metal layer 64 may be electrically isolated from the second electrical connections 46b and subsequently from the second reflector element portion 31b of each (or some of the) unit cells 18. To this end, the metal layer 64 may have an opening around each second electrical connections 46b. The metal layer 64 may subsequently not form a lateral overlap with the tile 14 and/or separation region 16 at such openings. For example, they may laterally overlap all of or part of the separation region 16 or array region 26, except for openings around one or more second electrical connections 46b.

Alternatively, the metal layer 64 may electrically connect with all electrical connections 32 or none of the electrical connections 32.

It is noted that the metallization layer 40 on the back side 42b of the support structure 12 of fig. 5b and the metal layer 64 of the layer stack in fig. 6a are not arranged in the same layer or same vertical position (e.g., same position in z-direction, e.g., perpendicular to the lateral directions) as the reflector elements 30. Due to the lateral overlap of the reflective region 24 with (at least a portion of) the separation region 16, electromagnetic waves that propagate past the tiles 14 may still be reflected by the reflective region 24. However, the vertical offset between the reflector elements 30 and the reflective region 24 (or surface of the reflective region 24) may be limited, for example, to 2 mm or less, e.g., 1 mm or less. As a result, destructive interferences between electromagnetic waves reflected by the reflector elements 30 and the reflective region 24 may be reduced.

Fig. 5a-6b show examples of a reflector structure 22 comprising a metallization layer or metal layer. Alternatively or additionally, the reflector 22 may comprise sub-regions of the support structure 12 with reflective surfaces.

Fig. 7a shows a schematic top view of an example of a reflector 10 with a subdivided region 66. The reflector 10 may be formed by the support structure 12.

In the example shown in fig. 7a, the entire support structure 12 forms the subdivided region 66. In a different example, only a portion of the support structure 12 forms a subdivided region 66. It is noted that in this context, the term "subdivided" is not to be understood as a physical separation (e.g., cutting) of the support structure 12, but as a definition of nonoverlapping regions.

The subdivided region 66 shown in fig. 7a comprises 16 x 16 = 256 sub-regions 68, wherein sub-regions of a first subset 70a each comprise an RIS (e.g., each comprise a unit cell 18). Sub-regions of a second subset 70b (e.g., dummy reflectors) each comprise a non-reconfigurable reflective surface 48. The support structure 12 therefore comprises a reflector structure 22 comprising (or consisting of) the second subset 70b of sub-regions 68. In the example shown in fig. 7a, the first subset 70a comprises 64 sub-regions 68 and the second subset 70b comprises 256 - 64 = 192 sub-regions 68. The first and second subsets 70a, b, are exclusive to each other. In other words, a sub-region 68 of the first subset 70a is not part of the second subset 70b, and vice versa.

The first and second subset 70a, b may form all the sub-regions 68 of the subdivided region 66 (as exemplarily shown in fig. 7a). Alternatively, the subdivided region 66 may comprise a third subset of sub-regions 68 (e.g., exclusive to the first and second subsets 70a, b). The third subset may, for example, not comprise a reflective surface (e.g. in order to form a separation region between two arrays 13 of tiles 14 and/or for a different function such as an attachment site).

The reflective surface 48 may be configured in the same way as the reflector elements 30 (or a portion thereof such as the first reflector element portion 31a) of the unit cells 18. For example, the reflective surface 48 may be a structured metal layer (e.g., formed by metallization) and may have the same shape and size as the first and/or second reflector element portions 31a, b. Therefore, some or all features (e.g., the reflective surface 48) of the sub-regions 68 of the second subset 46b may be fabricated in the same way (using the same lithography pattern and metallization steps) as the reflector elements 30. Alternatively, the reflective surface 48 may be fabricated differently.

In fig. 7a, lateral dimensions (e.g., width in row direction and height in column direction) of the sub-regions 68 of the first subset 70a and second subset 70b of sub-regions are the same. Therefore, all the sub-regions 68 have a square shape. Alternatively, some or all sub-regions 68 of the second subset 70b may have a different shape and/or lateral dimensions as the sub-regions 68 of the first subset 70a. Furthermore, sub-regions 68 of the same subset 70a, b may have the same or different size and/or shape.

In fig. 7a, the sub-regions 68 have a square shape and are arranged in a square array 13 of rows and columns, wherein the tiles 14 each have four sub-regions 68 (e.g., each tile 14 having four unit cells 18). The tiles 14 are separated from each other in a row direction (e.g., x-direction) by two consecutive sub-regions 68 (e.g., two directly adjacent sub-regions 68 arranged along the row direction) and are separated from each other in a column direction (e.g., y-direction) by two consecutive sub-regions 68 (e.g., two directly adjacent sub-regions 68 arranged along the column direction). Therefore, the tiles 14 are arranged in a square array 13 similar as depicted in fig. 4. Alternatively, the tiles 14 may be separated in row and/or column direction in a by a different amount of sub-regions 68 (e.g., one, three, four, five or more). The tiles 14 may be separated in row direction and column direction by the same amount of sub-regions 68 or by a different amount of sub-regions 68 (e.g., by one in row direction and by two in column direction).

Furthermore, the tiles 14 do not necessarily have to be arranged in a regular pattern as shown in fig. 7a. Instead, the first and second subsets 70a, b may be selected to result in an irregular patter (e.g., as depicted in fig. 2b).

Fig. 7b shows a schematic top view of another example of a reflector 10 with a subdivided region 66.

The subdivided region 66 comprises a first subset 70a and second subset 70b of sub-regions 68, wherein the first subset 70a comprises unit cells 18 with reflector elements 30 and the second subset 70b comprises reflective surfaces 48 that are not RIS. The reflector structure 22 comprises the second subset 70a, wherein the reflective surfaces 48 form the reflective region 24 of the reflector structure 22. The support structure 12 comprises tiles 14 with four unit cells 18, respectively.

As can be seen in fig. 7b, the tiles 14 are spaced from each other by a distance that is equal to a height and width of the sub-regions 68 (or unit cells 18) or a distance that is half a height and width of the tiles 14. Therefore, the tiles 14 may be spaced by a distance that smaller than, equal to, or larger than a height and width of the tiles 14. For example, the tiles 14 may be separated by the distance of an integer amount of sub-regions 68 (or unit cells 18).

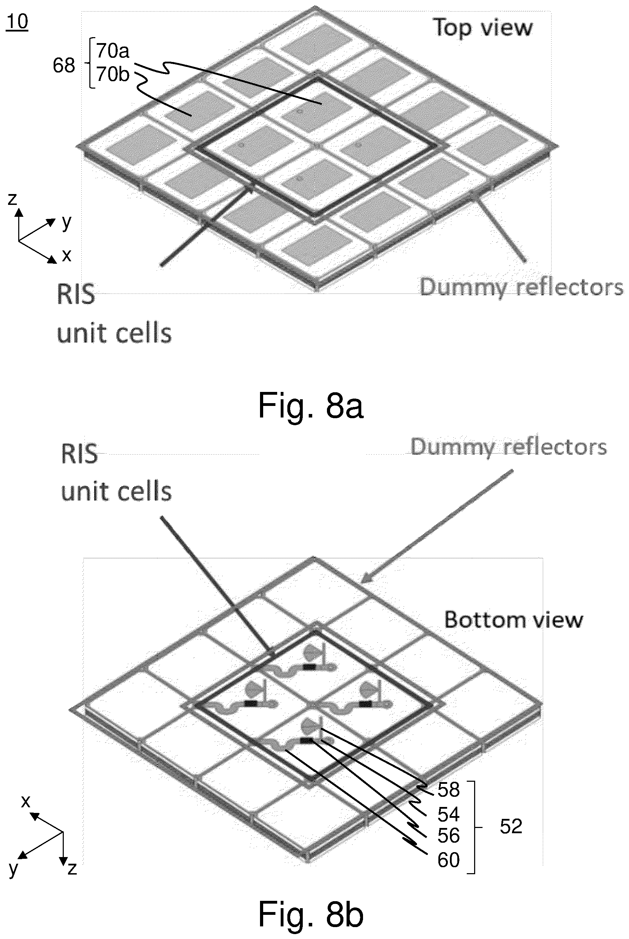

Fig. 8a shows a perspective view from the top of a portion of a reflector 10 having a subdivided region 66.

Fig. 8b shows a perspective view from the bottom of the portion of a reflector 10 fig. 8a. Any feature described with reference to fig. 8a may be applicable to fig. 8b and vice versa.

The sub-regions 68 of the first and second subsets 70a, b have the same type of reflector element 30 (e.g., at least one of same size, dimensions, and material). However, the sub-regions 68 of the second subset 70b do not comprise other RIS components such as first electrical connections 46a and a RIS control circuit 52. For example, the sub-regions 68 of the first subset 70a each comprise a first electrical connection 46a and a RIS control circuit 52 having a first diode connector 54, a PIN diode 56, a radial stub 58, and a second diode connector 60 (e.g., as described above with reference to fig. 5a, b). Therefore, the sub-regions 68 of the first subset 70a comprise a reconfigurable intelligent surface, RIS, and the sub-regions 68 of the second subset 70b each comprise a non-reconfigurable reflective surface. The sub-regions 68 of the second subset 70b therefore lack a circuitry that allows controlling reflection characteristics of the reflector element 30, e.g., lack circuitry that allows controlling an amount of phase difference experienced by a reflected electromagnetic wave. The sub-regions 68 of the second subset 70b subsequently form dummy reflectors.

However, the sub-regions 68 of the second subset 70b may comprise components that correspond to a portion of the components of the sub-regions of the first subset 70a. For example, the sub-regions 68 of the second subset 70b may comprise electrical connections through the support structure 12 (e.g., similar to the second electrical connections 46b). Such components may be provided, for example, if a high volume of support structures 12 are fabricated and later customized in regards to the array of tiles 14.

Furthermore, the sub-regions 68 of the second subset 70b may comprise components that affect the reflection of electromagnetic waves, but in a pre-configured or fixed manner that is not reconfigurable afterwards.

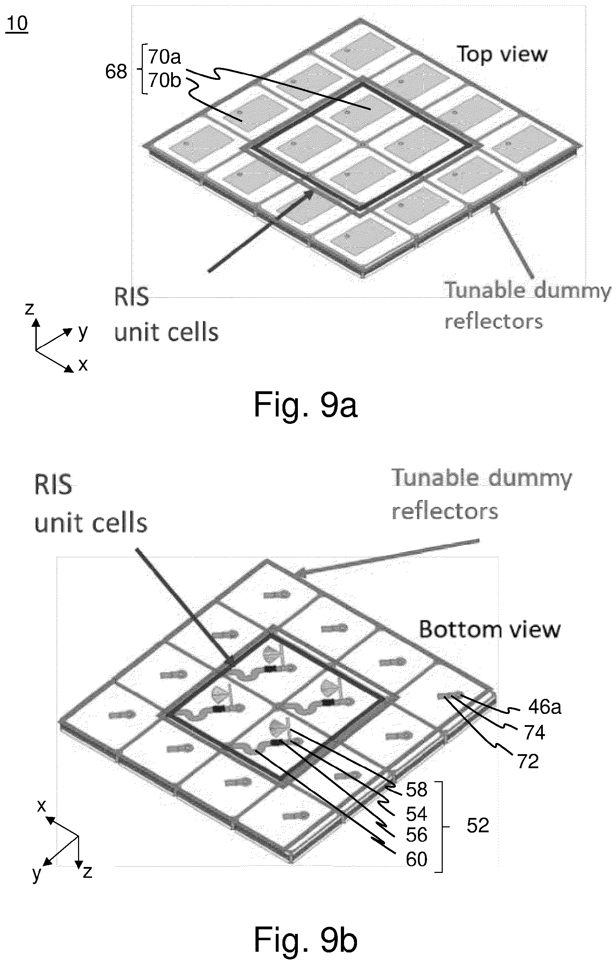

Fig. 9a shows a perspective view from the top of another example of a portion of a reflector 10 having a subdivided region 66.

Fig. 9b shows a perspective view from the bottom of the portion of a reflector 10 fig. 9a. Any feature described with reference to fig. 9a may be applicable to fig. 9b and vice versa.

The reflector 10 of fig. 9 has a subdivided region with a first and second set 70a, b of sub-regions 68. The sub-regions 68 of the first set 70 of sub-regions each comprise a first electrical connection 46a and a RIS control circuit 52 (e.g., comprising a first diode connector 54, a PIN diode 56, a radial stub 58, and a second diode connector 60).

The sub-regions 68 of the second set 70b of sub-regions each comprise a first electrical connection 46a, a pre-configured phase shifting component 72, and a component connector 74. The pre-configured phase shifting component 72 is configured to apply a pre-configured phase shift to an electromagnetic wave reflected at the respective sub-region 68. The first electrical connection 46a and component connector 74 of a respective sub-region 68 electrically connect the pre-configured phase shifting component 72 with the reflector element 30 of the respective sub-region 68. As a result, the sub-regions 68 of the second set 70b of sub-regions is tunable at fabrication, but then maintain a pre-configured phase shift that is no longer reconfigurable (at least by an electrical control signal). The sub-regions 68 of the second set 70b therefore constitute tunable dummy reflectors.

The sub-regions 68 of the second subset 70b of sub-regions are pre-configured to have a reflection characteristic (e.g., applying a pre-configured or fixed phase shift that is pre-configured during manufacturing of the sub-regions 68) so that, for an electromagnetic wave reflected by a sub-region 68 of the second subset 70b, an angle of incident is not equal to an angle of reflection. In other words, the sub-regions 68 of the second subset 70b are configured to not cause a specular reflection at least for a specific range of incident angles (or all incident angles). A pre-configured reflection characteristic may be able to improve reflection in the case that a predominant reflection angle is to be established. For example, the reflector 10 may be mounted in an industrial hall, where the a transmitter and/or receiver are arranged at a fixed location or move within a limited range, which results in a predominant reflection angel that can be set by pre-configured reflection characteristic.

It is noted that fig. 4 to 9b show various possible embodiments (e.g., application examples of metallization of tiles 14 that may be used in a sparse RIS). However, the present disclosure is not limited to the depicted examples and includes all possible version of structured metallization.

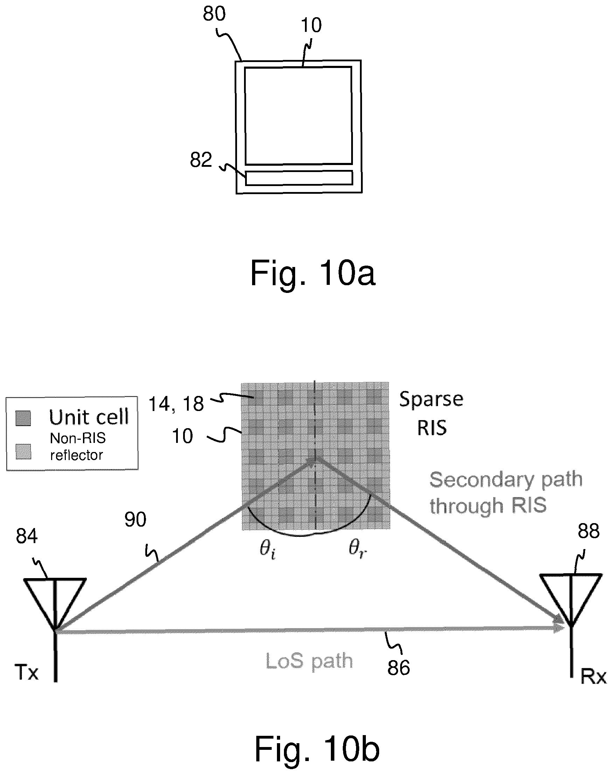

Fig. 10a shows a schematic view of a reflector device 80. The reflector device 80 comprises any reflector 10 (or a plurality of reflectors 10) as described herein and a reflector control circuit 82 configured to control the RIS of the reflector 10 (or of the plurality of reflectors 10).

The reflector device 80 or the reflector control circuit 82 may further comprise a power source configured to provide power for generating a control signal. Furthermore, the reflector device 80 may comprise a casing. The casing or the reflector 10 may comprise circuitry that is connected to (is connectable to) the reflector control circuit 82.

The reflector device 80 may comprise a signal interface for receiving an external signal. The external signal may be configured to control the RIS directly. Alternatively or additionally, the reflector control circuit 82 may be configured to generate control signals on a basis of the external control. For example, the external signal may be indicative of at least one of a position of a transmitter, a position of a receiver, an angle of incident, an angle or reflection, a difference between angle of incident and angle of reflection, a measure of beam focusing, and a measure of beam defocusing. The signal interface may be adapted for a wired signal connection or cable signal connection (e.g., not a wireless signal connection). The signal interface may comprise a socket and/or terminals for a cable connection. For example, a base station may be communicatively connected with the reflector device 80 my means of a cable, wherein the base station is configured to provide external signals to the reflector device 80 that form a basis for reconfiguration of the RIS.

The reflector device 80 may comprise an attachment structure (e.g., openings for receiving screws, e.g., formed at least partly in the housing of the reflector device 80) configured to attach the reflector device 80 to a wall and/or a pole.

The reflector device 80 may not comprising an antenna that is separate from the support structure, for example, that is configured to radiate electromagnetic waves based on a signal current received at an input for an electrical current separate from the support structure. In other words, the reflector device 80 may not comprise an antenna mechanically connected with the reflector 10 (e.g., for focusing beam of the antenna). However, the reflector device 80 may be used in combination with an antenna that is arranged separately from the reflector device 80.

For example, an antenna may be provided at a base station and the reflector device 80 may be attached to a separate building, wherein the reflector device 80 is arranged to reflect electromagnetic waves emitted by the antenna of the base station. In a different example, a transmitting device with an antenna is provided in a manufacturing hall and the reflector device 80 may be attached to a wall or corner spatially separate from the transmitting device, wherein the reflector device 80 is arranged to reflect electromagnetic waves emitted by the antenna of the transmitting device.

For example, the reflector device 80 may not comprise an antenna attached to or coupled with the reflector 10 (e.g., directly coupled with the reflector 10 and/or indirectly coupled with the reflector 10 with one or more further components of the reflector device 80), wherein the antenna is part of a transmitting or receiving system that is designed to radiate or to receive electromagnetic waves (e.g., defined according to IEEE definition).

The tiles 14 (e.g., the unit cells 18, e.g., the RIS, e.g., any component within the array region 26, e.g., the support structure 12, e.g., any component of the support structure 12) may be coupled (e.g., communicatively connected) neither to a transmitter nor a receiver (e.g., not coupled to a transceiver, e.g., a radio frequency transmitter and/or receiver). For example, the reflector 10 may not comprise circuitry configured to provide a transmitter signal (e.g., in form of an alternating current) from a transmitter (e.g., a transmitter capable of signal modulation) to the tiles 14 (e.g., the unit cells 18, e.g., the RIS, e.g., to any component within the array region 26, e.g., the support structure 12, e.g., any component of the support structure 12) in order to cause the tiles 14 to radiate electromagnetic waves (e.g., electromagnetic waves that are perceivable or receivable by a user equipment such as a mobile phone). Similarly, the reflector 10 may not comprise circuitry configured to provide a receiver signal generated by the tiles 14 (e.g., to any component within the array region 26, e.g., the support structure 12, e.g., any component of the support structure 12) intercepting electromagnetic waves to a receiver (e.g., capable of signal demodulation, e.g., a receiver signal perceivable or receivable by such a receiver). In other words, the reflector 10 may not be operable as an interface between wireless and wired signals for a receiver and/or transmitter (e.g., for electromagnetic waves of a cellular network).

The reflector 10 (or the reflector device 80) may comprise neither a transmitter nor a receiver (e.g., not comprise a transceiver). For example, the reflector 10 (or the reflector device 80) may not be configured to apply a radio frequency signal (e.g., with a frequency above 20 kHz, e.g., above 1kHz) to the tiles 14 (e.g., the unit cells 18, e.g., the RIS, e.g., to any component within the array region 26, e.g., the support structure 12, e.g., any component of the support structure 12). For example, the reflector 10 (or the reflector device 80) may be configured to apply different constant voltages to different ones of the tiles 14 (e.g., the unit cells 18, e.g., the RIS, e.g., to any component within the array region 26, e.g., the support structure 12, e.g., any component of the support structure 12), e.g., wherein an amplitude of the constant voltage is changeable at a frequency below 1kHz (e.g., below 10 Hz, e.g., 1 Hz). For example, the constant voltage for a tile 14 may be applied to the control circuit interface 35 shown in fig. 3b.

The reflector 10 (or the reflector device 80) may not comprise a radio frequency connector (e.g., RF port), e.g., not comprise radio frequency connector to a transmitter (e.g., separate from the reflector 10 or reflector device 80) and not comprise a radio frequency connector to a receiver (e.g., separate from the reflector 10 or reflector device 80) (e.g., not comprise a radio frequency connector to a transceiver). The reflector 10 (or the reflector device 80) may not comprise RF circuitry (e.g., between the unit cells 18 and a receiver or transmitter).

Normally, an antenna is coupled to a transceiver circuit that processes signals. Such a transceiver is usually an active device, e.g., working at RF frequencies. Such a transceiver may be expensive, complex and may consume a lot of power during operation. However, the reflector 10 (or reflector device 80) provides an advantage as it may hold no RF circuitry. Therefore, the reflector 10 (or reflector device 80) may be realized with less complexity, which may result in a compact design and/or cost efficient manufacturing process.

Fig. 10b shows a schematic view of an example of a reflector 10 (e.g., of a reflector device 80) used to reflect electromagnetic waves emitted by a transmitter 84. In other words, fig. 10b shows an overview of a system with an RIS. The reflector 10 in fig. 10b may be any reflector 10 disclosed herein.

The transmitter 84 emits (or radiates) electromagnetic waves via a first path 86 that has direct line of a sight, LoS, (e.g., LoS path) of a receiver 88. Furthermore, the transmitter 84 emits electromagnetic waves via second path 90 (e.g., secondary path through RIS) that is reflected at the reflector 10 to the receiver 88. The reflector 10 comprises an array of tiles 14 with unit cells 18 that allow changing a reflection angle of electromagnetic waves reflected by the tiles 14. As a result, a reflection angle θᵣ of reflected electromagnetic waves is different (e.g., smaller in fig. 10b) from an angle of incident θᵢ of impinging electromagnetic waves. The reflector 10 further comprises a reflector structure 22 that does not comprise reconfigurable intelligent surfaces. However, the reflector structure 22 can still increase the gain of a reflected signal compared to a reflector that has a dielectric (e.g., air) between the tiles of the array instead of the reflector structure 22.

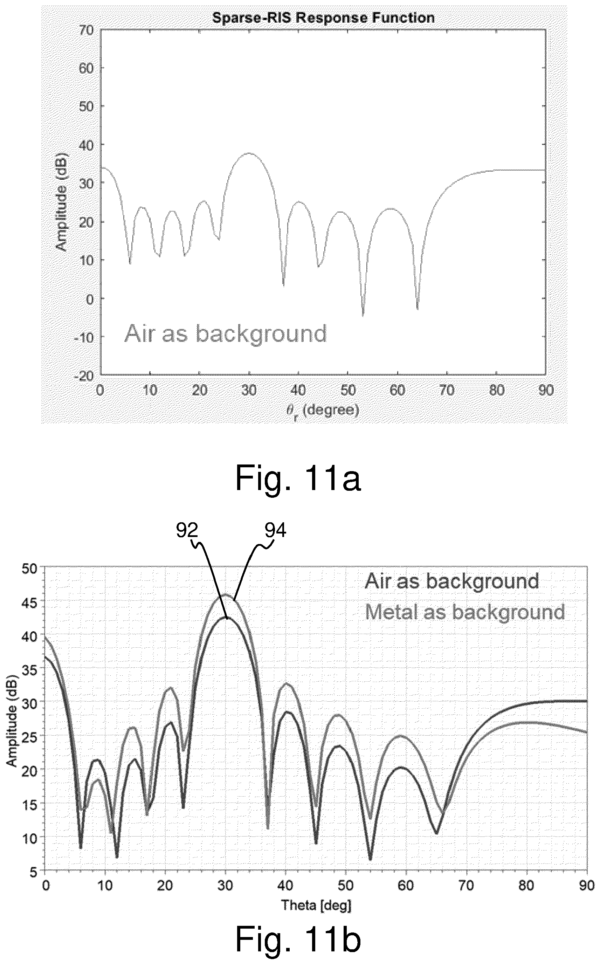

Fig. 11a shows results of an analytical simulation of an amplitude of a reflection of a sparse array of tiles without a reflector structure as described herein depending on a reflection angle.

Fig. 11b shows results of an electromagnetic field simulation of the amplitude of a reflection depending on a reflection angle.

In other words, fig .11a shows an analytical simulation for a sparse RIS with air as background and fig. 11b shows an example of a numerical simulation for a sparse RIS with air as background and a structured metallization (e.g., reflector structure 22) as background.

The simulation for fig. 11a is relates to an exemplary sparse RIS response (e.g., response of a reflector 10) that operates at 28 GHz and consists of a 10x10 unit cell array (e.g., an array of tiles 14 with one hundred unit cells 18). Its response is analyzed for a 30-degree incident wave angle and a 0-degree reflected wave angle. The results are presented in Figure 11b, which depicts the elevation radiation pattern with an azimuth cut at 0 degrees.

A first line 92 indicates an amplitude (or gain) without a reflector structure and a second line 94 indicates an amplitude (or gain) with a reflector structure as described herein. As can be seen, the second line 94 describes larger values compared to the first line 92 for a larger range of angles, indicating that the gain of the reflector 10 is increased.

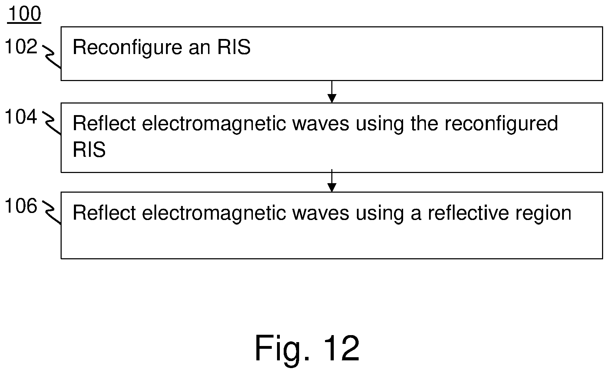

Fig. 12 shows a method 100 for reflecting electromagnetic waves using a reflector 10 as described herein.

The method 100 comprises, in a step 102, reconfiguring the RIS of the unit cells 18. Reconfiguring the RIS may include generating a control signal that is applied to the unit cells 18 in order to change their reflection characteristic (e.g., change a phase difference applied to reflected electromagnetic waves).

Reconfiguring the RIS of the unit cells 18 may comprise applying electrical signals to the unit cells 18 that causes a reflection characteristic (or reflection behavior) of the RIS of the unit cells 18 to change. For example, the electrical signals may cause a first unit cell 18 (or first tile 14 or first subset of tiles 14) to have a different reflection characteristic (or reflection behavior) than a second unit 18 (or second tile 14 or second subset of tiles 14). For example, the electrical signals may cause the first unit cell 18 (or first tile 14 or first subset of tiles 14) to manipulate an electromagnetic wave reflected by the first unit cell 18 to experience at least one of a different change of phase, a different phase of amplitude, and a different change of polarization compared to an electromagnetic waves reflected by the second unit cell 18. The electrical signals may change the reflection characteristics of more than the first and second unit cells 18.

The method 100 comprises, in a step 104, reflecting electromagnetic waves using the reconfigured RIS. Due to the reconfiguration, the RIS of the unit cells exhibit a different reflection characteristic, e.g., applying a different phase difference to reflected electromagnetic waves.

For example, the array of tiles 14 may receive electrical signals that cause reflected electromagnetic waves to experience different phase shifts, wherein the phase shifts have a gradient in a row direction of a rectangular (e.g., square) arrangement of tiles 14. As a result, the reflector 10 may cause in the row direction a reflection angel that differs from an incident angle of reflected electromagnetic waves. Similarly, a phase shift with a gradient in a radial direction (e.g., from a center towards a periphery of the reflector 10) may cause a beam focusing or defocusing effect.

The method 100 further comprises, in step 106, reflecting electromagnetic waves using the reflective region 24. Since the reflective region 24 does not comprise a reconfigurable intelligent surface, the method does not comprise a step of reconfiguring a reflective characteristic of the reflective region 24. In other words, the method 100 may comprise not providing an electrical signal for reconfiguration a RIS to the reflective region 24.

The reflective region 24 improves a total gain of the reflector, allowing the use of a sparse tile 14 arrangement with overall fewer tiles 14. Therefore, a complexity of manufacturing and controlling of the reflector 10 can be decreased.

The reflector 10 disclosed herein may provide several advantages over a reflector with a rotating metal sheet. The RIS do not require rotating a metal sheet and therefore reduce the risk of friction and a limited life span. Furthermore, RIS may operate faster than a mechanically rotated metal sheet, as the time taken for a metal sheet to rotate to the desired angle may be significant and can cause time delay. The reflector may be used to change a relationship between incident angle and reflection angle and therefore may provide less restriction on reflection angles. Using only a metal sheet as a reflector may restrict the reflected angle to match the incident wave angle, necessitating dynamic movement or limiting the field of operation. Furthermore, the RIS may require no or less rotation, which may improve space efficiency. A construction with a rotation setup may require more space instead. Implementing and controlling a large number of unit cells in RIS may become impractical for high frequencies and long-distance electromagnetic wave transmission. The sparse arrangement of the tiles may facilitate the implementation and control. The reflector structure may reduce losses in signal gain compared to conventional "sparse RIS" designs, where specific unit cells are removed with a dielectric between the remaining units (e.g., tiles). Furthermore, the provision of the reflector structure may require no advanced dielectric arranged between the tiles. The reflector may be used in applications related to radiofrequency engineering (e.g., for reflection in a cellular network or wireless local area network).

The reflector solves technical challenge of gain loss by inserting a structured metallization between the remaining units of a sparse RIS. Therefore, at least a portion of electromagnetic waves that would otherwise be lost through an unstructured dielectric may not be lost. Signal losses that may occur in conventional sparse RIS designs, where specific units are replaced with dielectric material may be reduced. The reflector 10 may therefore provide more efficient means of reflecting electromagnetic waves and improve an overall performance of a communication system.

The reflector 10 may comprise one or more of the following technical means. The present disclosure proposes the incorporation of a structured metallization (e.g., reflector structure) between the remaining units of a sparse RIS. The structured metallization may serve the purpose of reflecting electromagnetic waves that might be lost through an unstructured dielectric. By introducing the structured metallization, the present disclosure aims to mitigate signal losses commonly associated with traditional sparse RIS designs where specific units are replaced with unstructured dielectric.

The present disclosure addresses challenges in communication systems by proposing a solution for sparse RIS designs. Instead of leaving spaces between tiles, a structured metallization is strategically placed between the remaining units (e.g., tiles or unit cells) of the sparse RIS (see, for example, fig. 4 to 9b). This structured metallization can act as a reflector for electromagnetic waves, enhancing the overall efficiency of the communication system. The present disclosure aims to overcome limitations and disadvantages associated with previous solutions involving mechanically rotating metal sheets, such as friction, limited lifespan, and time delays in rotation. By providing an alternative means of reflecting electromagnetic waves, the present disclosure contributes to improved resilience and security in communication systems operating at high frequencies and over long distances.

For example, the reflector 10 may comprise a system structure that comprises sparse RIS that comprises or consists of a matrix of units (e.g., tiles 14 or unit cells 18), with certain units removed, wherein a structured metallization has been inserted between the remaining units (e.g., tiles 14 or unit cells 18). The structured metallization has, for example, the function of a reflector for electromagnetic waves. The size, shape and positioning of the structured metallization may have to be optimized to reflect the (e.g., otherwise) lost waves through the unstructured dielectric.

When electromagnetic waves hit the sparse RIS (e.g., impinge on the array region), the remaining units (e.g., the tiles 14) may dynamically reflect the waves according to their original configuration (e.g., according to a configuration controlled by a control signal). The inserted structured metallization (e.g., reflector structure) may act as an additional static reflector, reflecting lost waves and thus improving the overall efficiency of the system.

The reflector may therefore provide reduced signal losses compared to conventional sparse RIS designs with unstructured dielectric gaps. Furthermore, resilience and security in communication may be improved due to optimized reflection properties.

The reflector structure 22 essentially realized a structure metallization static reflector. The addition of a structured metallization may create an effective reflector for electromagnetic waves. The structured metallization may serve to reflect electromagnetic waves lost through the unstructured dielectric, contributing to improved signal transmission.

Compared to traditional sparse RIS designs, where removed units are replaced with unstructured dielectric, the structured metallization may reduce or minimize signal losses. The integration of the structured metallization may lead to optimized utilization of the remaining units of the sparse RIS (e.g., unit cells 18 of the array of tiles 14), resulting in improved overall efficiency, e.g., of a communication system. Overall, the present disclosure may contribute to increasing the performance and reliability, for example, of communication systems in environments, e.g., with high frequencies and long distances by providing innovative solutions to the challenges posed by sparse RIS designs.

### References:

[1] S. Dang, O. Amin, B. Shihada, and M.-S. Alouini, "What should 6g be?" Nature Electronics, vol. 3, no. 1, pp. 20-29, 2020
[2] Y. Liu et al., "Reconfigurable intelligent surfaces: Principles and opportunities," IEEE communications surveys & tutorials, vol. 23, no. 3, pp. 1546-1577, 2021.
[3] W. Chen, X. Yang, S. Jin, and P. Xu, "Sparse array of sub-surface aided anti-blockage mmwave communication systems," in GLOBECOM 2020-2020 IEEE Global Communications Conference, IEEE, 2020, pp. 1-6.
[4] Gupta, Anant, et al. "Design of large effective apertures for millimeter wave systems using a sparse array of subarrays." IEEE Transactions on Signal Processing 67.24 (2019): 6483-6497.

### Further Remarks:

Further embodiments will be defined by the enclosed claims.

It should be noted that any embodiments as defined by the claims can be supplemented by any of the details (features and functionalities) described in the above mentioned chapters.

Also, the embodiments described in the above mentioned chapters can be used individually, and can also be supplemented by any of the features in another chapter, or by any feature included in the claims.

Also, it should be noted that individual aspects described herein can be used individually or in combination. Thus, details can be added to each of said individual aspects without adding details to another one of said aspects.

Moreover, features and functionalities disclosed herein relating to a method can also be used in an apparatus (configured to perform such functionality). Furthermore, any features and functionalities disclosed herein with respect to an apparatus can also be used in a corresponding method. In other words, the methods disclosed herein can be supplemented by any of the features and functionalities described with respect to the apparatuses.

Also, any of the features and functionalities described herein can be implemented in hardware or in software, or using a combination of hardware and software, as will be described in the section "implementation alternatives".

### Implementation alternatives:

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable. The encoded media signal may be encoded into a data stream. The data stream may be stored on a digital storage medium as described above (e.g., a transitory digital storage medium).

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier (e.g., non-transitory storage medium).

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A reflector (10) for reflecting electromagnetic waves, comprising
a support structure (12) having a lateral extension and comprising
an array (13) of tiles (14), wherein the tiles (14) are sparsely arranged on the support structure (12) to be laterally separated from each other by a separation region (16) of the support structure (12), wherein each tile (14) comprises one or more unit cells (18) that each have a reconfigurable intelligent surface, RIS (20), and
a reflector structure (22) that is arranged to laterally overlap at least with the separation region (16), wherein the reflector structure (22) comprises a reflective region (24) that laterally overlaps at least with a portion of the separation region (16) and that does not comprise a reconfigurable intelligent surface.

2. The reflector (10) according to claim 1,
wherein a ratio between a total area of the separation region (16) and a total area of the tiles (14) is equal to one or larger.

3. The reflector (10) according to claim 1 or 2,
wherein the tiles (14) are arranged in a rectangular array (13) with rows and columns and the unit cells (18) have a common cell width in a row direction and a common a cell height in a column direction, wherein the tiles (14) are separated from each other in the row direction with a distance equal to or larger than the cell width and are separated from each other in the column direction with a distance equal to or larger than the cell height.

4. The reflector (10) according to any of the preceding claims,
wherein the reflective region (24) laterally overlaps with at least a quarter of the separation region (16).

5. The reflector (10) according to any of the preceding claims,
wherein the reflector structure (22) comprises a metallization layer (40) that laterally overlaps at least partially with the separation region (16) and does not laterally overlap with the tiles (14), wherein the metallization layer (40) is arranged on at least one of a front surface of the support structure (12) and a back surface of the support structure (12) that faces away from the front surface.

6. The reflector (10) according to claim 5,
wherein the metallization layer (40) comprises a continuous portion with a plurality of openings (62) that each surround a tile (14) of the array (13) of tiles (14).

7. The reflector (10) according to any of the preceding claims,
wherein the support structure (12) comprises a printed circuit board or integrated circuit having a stack of layers, wherein the reflector structure (22) comprises a metal layer (64) that is part of the stack of layers.

8. The reflector (10) according to claim 7,
wherein the metal layer (64) of the stack of layers is electrically connected to one or more of the RIS (20).

9. The reflector (10) according to any of the preceding claims,
wherein the RIS (20) of the array (13) of tiles (14) are controllable to change a phase shift of an electromagnetic wave reflected by the RIS (20).

10. The reflector (10) according to claim 9,
wherein the RIS (20) of the array (13) of tiles (14) each comprise
a reflector element (30, 31a, 31b) on a front surface of the support structure (12),
a RIS control circuit (52) for changing the phase shift, wherein the RIS control circuit (52) is arranged on a backside of the support structure (12) opposite of the front surface, and
an electrical connection (32, 48a, 48b) through the support structure (12) for electrically connecting the reflector element (30, 31a, 31b) and the RIS control circuit (52).

11. The reflector (10) according to any of the preceding claims,
wherein the support structure (12) comprises a subdivided region (66), in which the support structure (12) is subdivided into laterally neighboring sub-regions (68), wherein sub-regions (68) of a first subset (70a) of the sub-regions (68) each comprise a reconfigurable intelligent surface of the array (13) of tiles (14) and sub-regions (68) of a second subset (70b) of the sub-regions (68) each comprise a non-reconfigurable reflective surface.

12. The reflector (10) according to claim 11,
wherein lateral dimensions of the sub-regions (68) of the first subset (70a) and second subset (70b) of sub-regions (68) are the same.

13. The reflector (10) according to claim 12,
wherein the sub-regions (68) have a rectangular shape and are arranged in a rectangular array (13) of rows and columns, wherein the tiles (14) are separated from each other in a row direction by one or more consecutive sub-regions (68) and are separated from each other in a column direction by one or more consecutive sub-regions (68).

14. The reflector (10) according to any of the claims 11 to 13,
wherein the sub-regions (68) of at least the first subset (70a) have a rectangular shape with a side length in a range of
- 1.5 mm to 2 mm, e.g., a range of 1.8 mm to 1.95 mm,
- 2 mm to 3 mm, e.g., 2.3 mm to 2.4 mm,
- 5 mm to 6 mm, e.g., a range of 5.3 mm to 5.5 mm, or
- 22 mm to 28 mm, e.g., 24 mm to 26 mm.

15. The reflector (10) according to any of the claims 11 to 14,
wherein sub-regions (68) of the second subset (70b) of sub-regions (68) are pre-configured to have a reflection characteristic so that, for an electromagnetic wave reflected by a sub-region (68) of the second subset (70b), an angle of incident is not equal to an angle of reflection.

16. A reflector device (80) comprising
the reflector (10) according to any of the preceding claims,
a reflector control circuit (82) configured to control the RIS.

17. The reflector device (80) according to claim 16,
not comprising an antenna that is separate from the support structure (12).

18. A method (100) for reflecting electromagnetic waves using a reflector (10) comprising a support structure (12) having a lateral extension and comprising an array (13) of tiles (14), wherein the tiles (14) are sparsely arranged on the support structure (12) to be laterally separated from each other by a separation region (16) of the support structure (12), wherein each tile (14) comprises one or more unit cells (18) that each have a reconfigurable intelligent surface, RIS, and a reflector structure (22) that is arranged to laterally overlap at least with the separation region (16), wherein the reflector structure (22) comprises a reflective region (24) that laterally overlaps at least with a portion of the separation region (16) and that does not comprise a reconfigurable intelligent surface, the method (100) comprising
reconfiguring (102) the RIS (20),
reflecting (104) electromagnetic waves using the reconfigured RIS, and
reflecting (106) electromagnetic waves using the reflective region (24).
